# EUROPEAN PATENT SPECIFICATION

(11) **EP 3 251 449 B1**
(45) Date of publication and mention of the grant of the patent: **07.04.2021**
(21) Application number: 15881845.0
(22) Date of filing: 09.12.2015
(51) Int. Cl.: H04L 5/14, H04L 5/16, H04W 72/08, H04W 24/02

(54) **SYSTEM, APPARATUS AND METHOD FOR FULL-DUPLEX OPERATION IN A WIRELESS COMMUNICATIONS SYSTEM**
SYSTEM, GERÄT UND VERFAHREN FÜR VOLL-DUPLEX-BETRIEB IN EINEM DRAHTLOSKOMMUNIKATIONSSYSTEM
SYSTÈME, APPAREIL ET PROCÉDÉ DE FONCTIONNEMENT EN DUPLEX INTÉGRAL DANS UN SYSTÈME DE COMMUNICATIONS SANS FIL

(30) Priority: 09.02.2015 US 201514617679
(43) Date of publication of application: 06.12.2017
(73) Proprietor: Huawei Technologies Co., Ltd., Longgang District Shenzhen, Guangdong 518129 (CN)
(72) Inventor: WU, Huan, Kanata, Ontario K2M 2W8 (CA); HUM, Eddy Shi-Ning, Ottawa, Ontario K2C 3R9 (CA); SHIU, Wan-Yi, Kanata, Ontario K2T 0E3 (CA); RAO, Nanyuan, Kanata, Ontario K2M 2N4 (CA)
(74) Representative: Pfenning, Meinig & Partner mbB
(86) International application number: PCT/CN2015/096835
(87) International publication number: WO 2016/127696

(56) References cited:
- WO-A1-2014/130112
- WO-A2-2011/034317
- CN-A- 101 123 449
- US-A1- 2014 233 407
- US-A1- 2014 348 032
- OYERINDE, OLUTAYO O. ET AL.: 'Subspace Tracking-Based Decision Directed CIR Estimator and Adaptive CIR Prediction' IEEE TRANSACTIONS ON VEHICULAR TECHONOLOGY vol. 61, no. 5, 30 June 2012, XP011447151
- 3RD GENERATION PARTNERSHIP PROJECT ET AL.: 'Solutions on VAMOS Enhancements' 3GPP TR 43.801 V12.0.0 31 May 2014, page 6.1.6 AND 7.2.1, XP050774457

## Description

### TECHNICAL FIELD

The present disclosure relates generally to digital communications, and more particularly to a system, apparatus and method for full-duplex operation in a wireless communications system.

### BACKGROUND

Full-duplex is being considered as a radio access technology for Fifth Generation (5G) and beyond wireless communication systems. In full-duplex operation, a device simultaneously transmits and receives on the same channel. A significant challenge in a full-duplex communications system is interference at a device's receiver(s), where the interference comes directly from a transmitter(s) of the device. Such interference may be referred to as self-interference. As an example, for a Third Generation Partnership Project (3GPP) Long Term Evolution (LTE) base station transceiver, the self-interference may be as much as 120 dB higher than the sensitivity level of the receiver(s) of the 3GPP LTE base station transceiver.

Therefore, there is a need for a frame structure for 3GPP LTE wireless communications systems, such as time division duplexed (TDD) wireless communications systems, that requires minimal changes to existing technical standards, and maintains compatibility with legacy hardware.
WO 2011/034317 A2 discusses a method and apparatus for transmitting a reference signal in a time division duplex system. A base station generates a plurality of demodulation reference signals (DMRSs) for respective layers, maps the plurality of DMRSs to a downlink pilot time slot (DwPTS) region for downlink transmission within a special subframe; and transmits the plurality of DMRSs through a plurality of antennas. The special subframe is a subframe for separating uplink and downlink between an uplink subframe and a downlink subframe within a frame.
US 2014/0348032 A1 discusses that node of a full duplex wireless transmission system may include cancellation signal generation elements. The cancellation signal generation elements may extract a waveform from received signals, for example signals transmitted from the node, and use the waveform to generate a prefilter or cancellation signal to apply to further received signals. The cancellation signal may cancel interference in received signals caused by signals transmitted from the node.

### SUMMARY OF THE DISCLOSURE

According to the present invention there is provided a method, according to claim 1, wherein the method is for operating a device capable of full-duplex operation and self-interference cancellation, a corresponding device according to claim 9 and a wireless communication system as in claim 11. Embodiments are further defined by the dependent claims.

### BRIEF DESCRIPTION OF THE DRAWINGS

For a more complete understanding of the present disclosure, and the advantages thereof, reference is now made to the following descriptions taken in conjunction with the accompanying drawing, in which:
Figure 1 illustrates an example communications system according to example embodiments described herein;
Figure 2 illustrates an example full-duplex device according to example embodiments described herein;
Figure 3a illustrates a diagram of an example overview of 3GPP LTE TDD uplink-downlink configurations according to example embodiments described herein;
Figure 3b illustrates an example sequence of subframes of a frame for a 3GPP LTE TDD compliant communications system according to example embodiments described herein;
Figure 4a illustrates example subframe structures for different UE types according to example embodiments described herein;
Figure 4b illustrates an example full-duplex subframe structure according to example embodiments described herein;
Figure 4c illustrates an example sequence of subframes of a frame for a communications system supporting full-duplex operation according to example embodiments described herein;
Figure 5 illustrates a flow diagram of example operations occurring in a full-duplex device transmits a frame that includes assistance in performing self-interference cancellation according to example embodiments described herein;
Figure 6 illustrates an example special subframe with an extended half-duplex pilot signal (or training signal) according to example embodiments described herein;
Figure 7 illustrates an example full-duplex frame structure with an extended TP special subframe according to example embodiments described herein;
Figure 8 illustrates a diagram of an example overview of full-duplex frame configurations derived from 3GPP LTE TDD uplink-downlink frame configurations according to example embodiments described herein;
Figure 9 illustrates a flow diagram of example operations occurring at a device operating in full-duplex mode according to example embodiments described herein; and
Figure 10 illustrates an example communications device according to example embodiments described herein.

### DETAILED DESCRIPTION OF ILLUSTRATIVE EMBODIMENTS

One embodiment of the disclosure relates to full-duplex operation in a wireless communications system. For example, a device schedules a first flexible allocation resource of a frame as a first resource for a second device served by the first device, schedules a second flexible allocation resource of the frame as a second resource for a third device served by the first device, and generates the frame including the flexible allocation resources and a first half-duplex training period configured to convey a first training signal, where the first half-duplex training period and the first training signal facilitate an estimation of a channel impulse response (CIR) of a communications channel between a transmit antenna of the first device and a receive antenna of the first device. The device also transmits the frame, and simultaneously receives the frame.

The present disclosure will be described with respect to example embodiments in a specific context, namely Third Generation Partnership Project (3GPP) Long Term Evolution (LTE) TDD compliant communications systems that support full-duplex operations. The disclosure may be applied to standards compliant communications systems, such as those that are compliant with 3GPP LTE frequency division duplexed (FDD), IEEE 802.11, and the like, technical standards, and non-standards compliant communications systems, that support full-duplex operations.

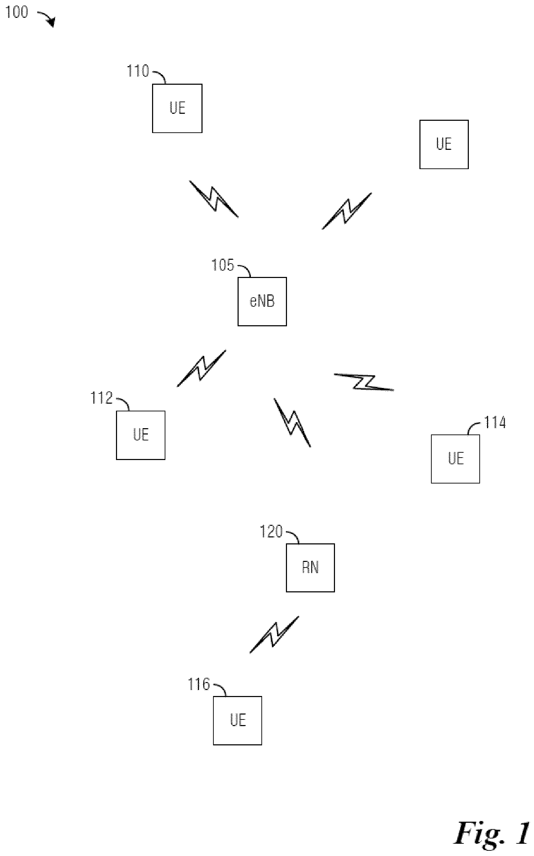

Figure 1 illustrates an example communications system 100. Communications system 100 includes an eNB 105. eNB 105 may serve user equipment (UE), such as UE 110, UE 112, and UE 114. In general, eNB 105 may operate as an intermediary for the UEs, receiving transmissions to and from the UEs and then forwarding the transmissions to their intended destination. Communications system 100 may also include a relay node (RN) 120 that uses some bandwidth donated by eNB 105 to serve UEs, such as UE 116. RN 120 may help to improve coverage, data rate, as well as overall communications system performance, by utilizing some network resources donated by eNB 105. eNBs may also be commonly referred to as base stations, NodeBs, controllers, access points, base station transceiver, and the like, while UEs may also be commonly referred to as stations, mobiles, mobile stations, terminals, users, subscribers, and the like.

While it is understood that communications systems may employ multiple eNBs capable of communicating with a number of UEs, only one eNB, one RN, and a number of UEs are illustrated for simplicity.

A half-duplex device is capable of only transmitting or receiving at any given time, frequency, and optionally space that it is allowed to communicate. In general, half-duplex devices do not have to worry about self-interference. In other words, since receivers of a half-duplex device are not being used at the same time, frequency, and optionally space as transmitters of the half-duplex device, the receivers do not have to worry about interference caused by the transmitters. A full-duplex device is capable of transmitting and receiving at any given time, frequency, and optionally space that it is allowed to communicate. Full-duplex devices may have built-in mechanisms to compensate for the self-interference. A full-duplex device may also operate as a half-duplex device.

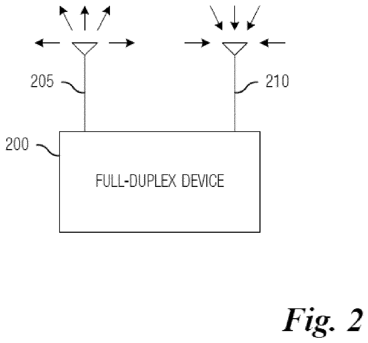

Figure 2 illustrates an example full-duplex device 200. Full-duplex device 200 may be an eNB capable of full-duplex operation. Full-duplex device 200 may also be a UE capable of full-duplex operation. Full-duplex device 200 may include one or more transmit antenna 205 and one or more receive antenna 210. Since in most implementations, transmit antenna 205 are relatively close to, collocated with, or shared with receive antenna 210, signals transmitted using transmit antenna 205 may appear at receive antenna 210 at significantly higher power levels than transmissions made by remotely located devices that are transmitting to full-duplex device 200. Although full-duplex device 200 is shown in Figure 2 as having collocated or shared transmit antenna 205 and receive antenna 210, alternative implementations of full-duplex device 200 may have remotely located transmit antenna 205 and optionally receive antenna 210. As an illustrative example, an alternate full-duplex device may include multiple remote antennas serving as transmit antennas and optionally receive antennas. Therefore, the illustration of full-duplex device 200 having co-located antennas should not be construed as being limiting to either the scope of the example embodiments.

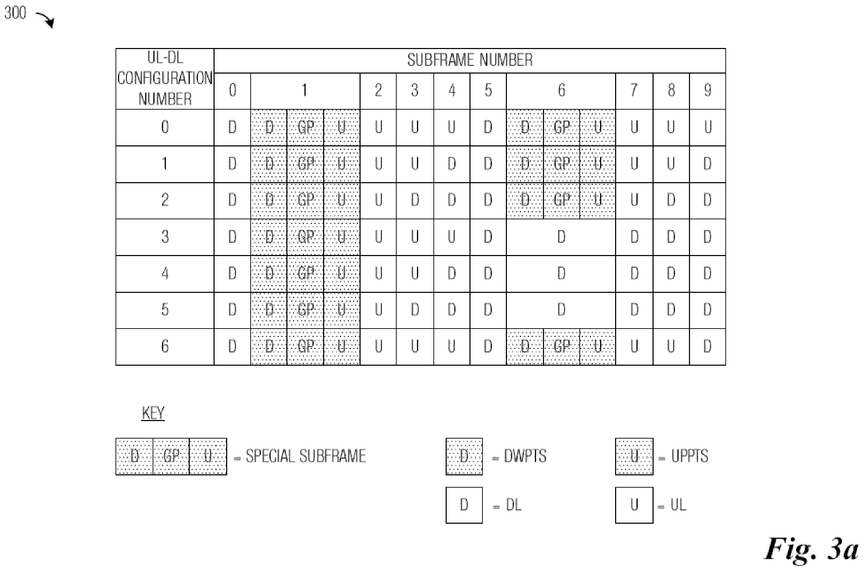

Figure 3a illustrates a diagram 300 of an example overview of 3GPP LTE TDD uplink-downlink configurations. Diagram 300 displays uplink and downlink assignments for subframes for a variety of different configurations of a 3GPP LTE TDD compliant communications system. In general, a frame of a 3GPP LTE TDD compliant communications system is partitioned into 10 subframes, numbered from 0 to 9. Some of the subframes may be used only for downlink communications (denoted D for either a normal downlink subframe or a downlink pilot time slot (DwPTS) in a special subframe), while some of the other subframes may be used only for uplink communications (denoted U for either a normal uplink subframe or a uplink pilot time slot (UpPTS) in a special subframe). Although the discussion focuses on 3GPP LTE TDD, the example embodiments presented herein are also operable with 3GPP LTE FDD, as well as other technical standards, such as IEEE 802.11, WiMAX, and the like. Therefore, the discussion should not be construed as being limiting to either the scope of the example embodiments.

As shown in Figure 3a, the shaded subframes indicate subframes that, in a 3GPP LTE TDD half-duplex communications system, may be used for both uplink and downlink communications. The subframes that are usable for both uplink and downlink communications (i.e., the shaded subframes) may be referred to special subframes and include subframe #1 in all of the illustrated configurations, as well as subframe #6 in configurations 0, 1, 2, and 6. In half-duplex devices, when switching from uplink operation to downlink operation (and vice versa), a period is sometimes needed to allow for the circuitry of the half-duplex devices to be re-configured, as well as to provide sufficient spacing to help align timing and reduce interference between the signals. In 3GPP LTE, the period is referred to as a guard period (GP). In 3GPP LTE TDD compliant communications systems, the special subframes include a downlink portion (a DwPTS) followed by a GP followed by an uplink portion (an UpPTS).

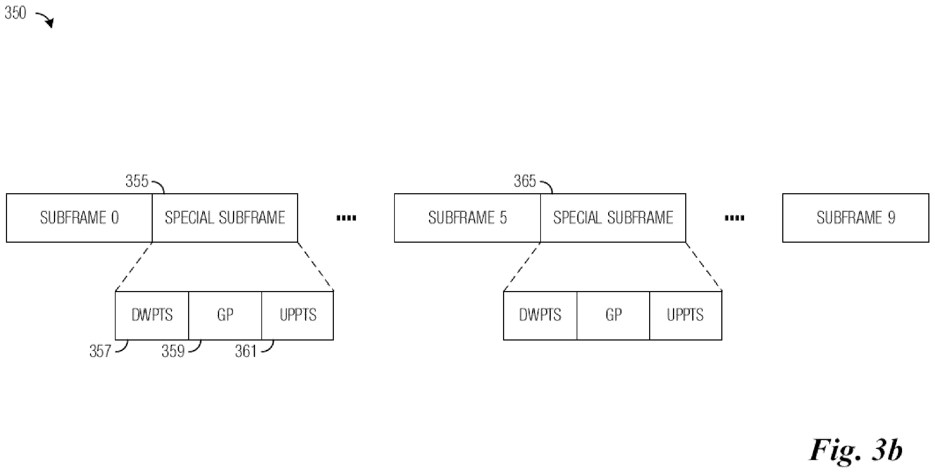

Figure 3b illustrates an example sequence of subframes 350 of a frame for a 3GPP LTE TDD compliant communications system. Sequence of subframes 350 may be representative of subframes for a 3GPP LTE TDD compliant communications system utilizing configurations 0, 1, 2, and 6. Sequence of subframes 350 includes a first special subframe 355 comprising a DwPTS portion 357, a GP portion 359, and an UpPTS portion 361. Sequence of subframes 350 also includes a second special subframe 365. For 3GPP LTE TDD compliant communications systems utilizing configurations 3, 4, and 5, a representative sequence of subframes may be similar, but with an exception that there is only a single special subframe per frame. Table 1 illustrates a number of samples available in the three portions of a special subframe for different 3GPP LTE TDD subframe configurations.

**Table 1: Samples for Subframe Configurations.**

| Number of Samples Number Samples | Special Subframe Configuration | | | | | | | |
|---|---|---|---|---|---|---|---|---|
| | 0 | 1 | 2 | 3 | 4 | 5 | 6 | 7 |
| DwPTS | 7680 | 20480 | 23040 | 25600 | 7680 | 20480 | 23040 | 12800 |
| UpPTS | 2560 | 2560 | 2560 | 2560 | 5120 | 5120 | 5120 | 5120 |
| GP | 20480 | 7680 | 5120 | 2560 | 17920 | 5120 | 2560 | 12800 |

As discussed previously, self-interference is a significant hindrance to full-duplex operation. Self-interference cancellation may be used to remove the contribution of the self-interference at the receiver of the full-duplex device.

According to an example embodiment, existing subframe configurations are reused to help maintain compatibility with legacy devices and to minimize changes to existing technical standards. Maintaining compatibility with legacy devices and minimizing changes to existing technical standards may help to simplify acceptance of full-duplex devices and minimize expenditures in implementing full-duplex communications systems.

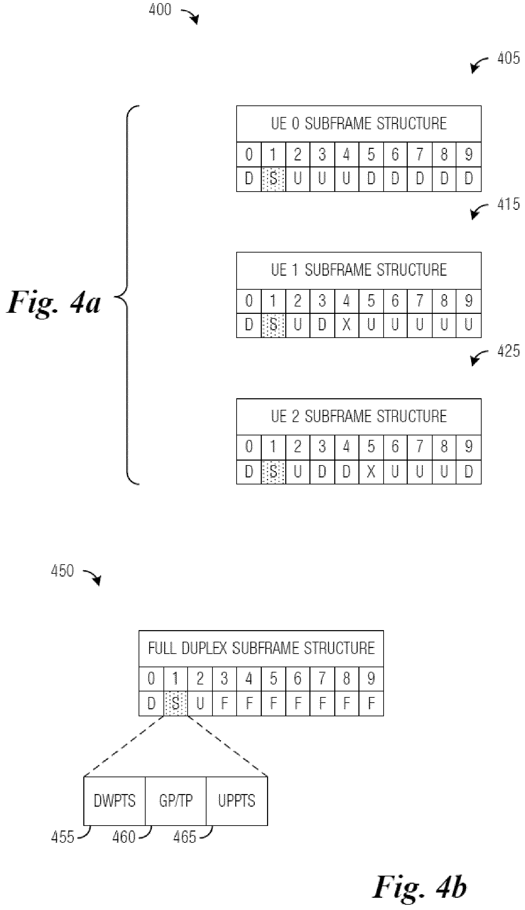

Figure 4a illustrates example subframe structures 400 for different UE types. Subframe structures 400, as shown in Figure 4a, are based on subframe configuration 3 of a 3GPP LTE TDD compliant communications system. The subframes shown in Figure 4a are of illustrative purposes only, and other subframe structures are possible. A first example subframe structure 405 is for a legacy UE and follows configuration 3 without modification. A second example subframe structure 415 may support a full-duplex aware UE, which knows that full-duplex operation is present in the communications system, but is not capable of full-duplex operation. A third example subframe structure 425 may support a full-duplex UE, which is capable of full-duplex operation. Second example subframe structure 415 and third example subframe structure 425 also support situations where neither UL nor DL operations are scheduled with such subframes being labeled X (for example, subframe 4 in second example subframe structure 415 and subframe 5 in third example subframe structure 425).

According to an example embodiment, a full-duplex device transmits a training signal (or pilot signal) in the GP of the special subframes to allow the full-duplex device to estimate a channel impulse response (CIR) of a communications channel from the transmit antenna to the receive antenna of the full-duplex device. When the GP includes the training signal (or pilot signal), the GP may be referred to as a training period (TP). In general, the GP when capable of carrying the training signal (or pilot signal) may be referred to as a GP/TP. The GP/TP is a half-duplex period during which the full-duplex device transmits the training signal (or pilot signal) and transmissions from other devices served by the full-duplex device are not scheduled. The CIR is be used to cancel the self-interference in the received signal. The transmission of the training signal (or pilot signal) helps to ensure that the estimated CIR is not influenced by other signals received by the receive antenna, e.g., uplink transmissions received by the receive antenna. The presence of at least one GP/TP per frame (with subframe configurations 3, 4, and 5, while configurations 0, 1, 2, and 6 have two GP/TP per frame) allows the full-duplex device to regularly perform CIR estimation to help ensure that it is able to maintain an accurate estimate of the self-interference. Examples of training signal (or pilot signal) that may be used for CIR estimation are discussed in detail in co-assigned patent application entitled "System and Method for Training Signals for Full-Duplex Communications Systems", attorney docket number HW 91018007US01, published as US US 2016/0233903 A1.

Figure 4b illustrates an example full-duplex subframe structure 450. Full-duplex subframe structure 450 is based on subframe configuration 3 of a 3GPP LTE TDD compliant communications system and is capable of supporting the three example subframe structures shown in Figure 4a. Subframes 0 and 2 of full-duplex subframe structure 450 may be used for downlink transmissions and uplink transmissions, respectively. Subframe 1 of full-duplex subframe structure 450 may be a special subframe including a DwPTS portion 455, a GP/TP 460, and an UpPTS portion 465. GP/TP 460 may serve several purposes. From the perspective of a legacy UE or a full-duplex aware UE, GP/TP 460 may serve as a GP between DwPTS portion 455 and UpPTS portion 465. However, when full-duplex subframe structure 450 is used in conjunction with a full-duplex eNB, GP/TP 460 may be used to allow full-duplex devices (a full-duplex eNB in this example) to perform CIR estimation in accordance with a half-duplex pilot signal (or training signal) transmitted in GP/TP 460. The length of GP/TP 460 may be adjusted using special subframe configurations. As an illustrative example, as indicated in Table 1, the number of samples in a GP/TP (e.g., GP/TP 460) changes with the subframe configuration. Hence, it may possible to select a subframe configuration that supports a required GP/TP length.

Remaining subframes of full-duplex subframe structure 450 may be utilized in a flexible (F) manner, meaning that each subframe may be used for downlink transmissions and uplink transmissions. In other words, one or more uplink transmissions and optionally one or more downlink transmissions may be scheduled for each subframe. The scheduling for the subframes that may be used in a flexible manner may be optimized based on a number of criterion (criteria), such as maximum capacity, interference constraints, and the like. From a UE's perspective, the UE may need to be able to prepare an uplink transmission or a downlink reception based on scheduling assignments received on a control channel or higher layer signaling (such as radio resource control (RRC) signaling).

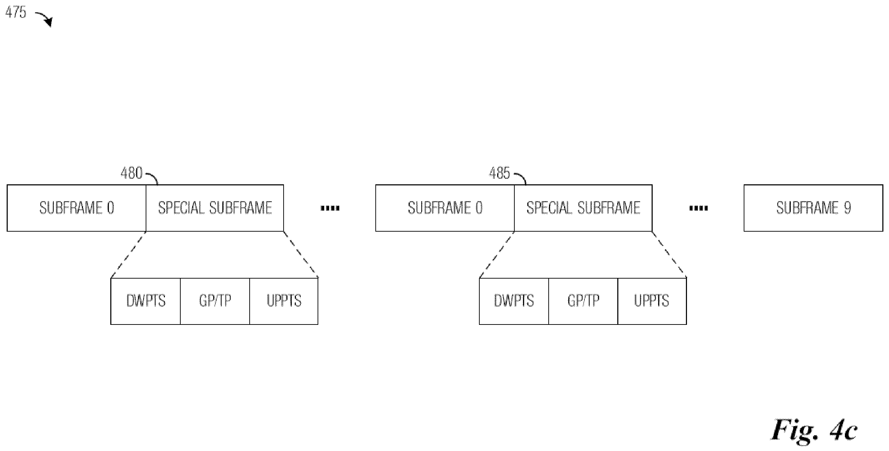

Figure 4c illustrates an example sequence of subframes 475 of a frame for a communications system supporting full-duplex operation. Sequence of subframes 475 may be representative of subframes for a communications system supporting full-duplex operation utilizing extensions to 3GPP LTE TDD compliant communications system utilizing configurations 0, 1, 2, and 6. Sequence of subframes 475 includes a first special subframe 480 comprising a DwPTS portion, a GP/TP portion, and an UpPTS portion. Sequence of subframes 475 also includes a second special subframe 485. For communications system supporting full-duplex operation utilizing extensions to 3GPP LTE TDD compliant communications system utilizing configurations 3, 4, and 5, a representative sequence of subframes may be similar, but with an exception that there is only a single special subframe per frame.

According to an example embodiment, a full-duplex device generates a special subframe including a half-duplex pilot signal in the GP/TP of the special subframe and transmits the special subframe.

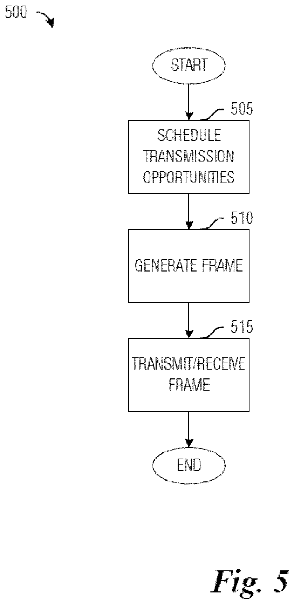

Figure 5 illustrates a flow diagram of example operations 500 occurring in a full-duplex device transmits a frame that includes assistance in performing self-interference cancellation. Operations 500 may be indicative of operations occurring in a full-duplex device, such as an eNB, as the full-duplex device transmits a frame that includes assistance in performing self-interference cancellation.

Operations 500 may begin with the full-duplex device scheduling transmission opportunities (both downlink and uplink transmissions) (block 505). The full-duplex device schedules downlink transmissions to UEs as well as uplink transmissions for UEs on the same or different subframe and frequency band. If the full-duplex device is scheduling transmissions for legacy UEs, the full-duplex device may follow subframe configurations compatible with the legacy UEs, such as the 3GPP LTE TDD subframe configurations discussed previously and upon which the full-duplex subframes are based. If the full-duplex device is scheduling transmissions for full-duplex UEs or full-duplex aware UEs, the full-duplex device may follow the flexible subframe configurations compatible with the full-duplex UEs or the full-duplex aware UEs.

The full-duplex device generates a frame in accordance with the schedule transmission opportunities (block 510). The frame includes a GP/TP that comprises a training signal (or equivalently, pilot signal) to help the full-duplex device perform CIR estimation for self-interference cancellation purposes. The frame follows the format of example frames discussed herein. Alternatively, the frame may follow the format of other frames not discussed herein as long as the frame includes a training period that may be allocated in a manner similar to or different from the GP/TP in the 3GPP LTE TDD example presented herein. The full-duplex device transmits and receives the frame (block 515).

According to an example embodiment, it is possible to extend the length of the training signal (or pilot signal) to be longer than a GP/TP portion(s) that is limited due to restrictions imposed by the special frame configurations and the minimization of overhead of full-duplex operation. Since the training signal (or pilot signal) is transmitted by the full-duplex device, it may be possible to schedule and use a subset of portions of a special subframe dedicated for downlink transmissions to also carry the training signal (or pilot signal). The overhead of full-duplex is increased in this case due to the additional use of the system resources (a portion of the downlink portion of the special subframe(s)). More generally, any portion of the system resource (e.g., uplink and optionally downlink) may be reserved and used for a training period transmitting pilot signal for full-duplex operations. It is noted that the portion of the special subframe dedicated for downlink transmission may be used for downlink transmissions when the special subframe is being used for legacy UE communications, while when full-duplex UE and optionally full-duplex aware UE is available and requests for communications, the portion of the special subframe may be configured for flexible (F) communications.

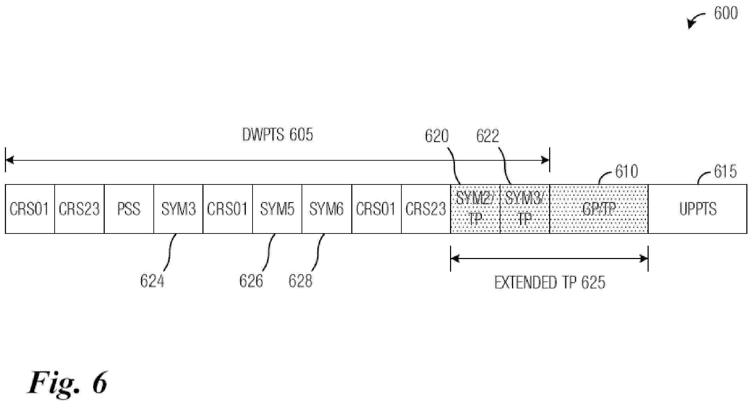

Figure 6 illustrates an example special subframe 600 with an extended half-duplex pilot signal (or training signal). Special subframe 600 includes a DwPTS portion 605, a GP/TP 610, and an UpPTS portion 615. In situations where a longer training signal (or pilot signal) is warranted, but legacy compatibility is needed, a subset of DwPTS portion 605 may be reserved by a scheduler and used to carry the training signal (or pilot signal). As shown in Figure 6, a part of DwPTS portion 605 (SYM2/TP 620 and SYM3/TP 622) is used to carry the training signal (or pilot signal), yielding an extended TP. Although shown in Figure 6 as being contiguous, the subset of DwPTS portion 605 used to carry the training signal (or pilot signal) may have to be contiguous with GP/TP 610. As an illustrative example, parts of DwPTS portion 605 not reserved for control signaling (including but not limited to SYM3 624, SYM5 626, and SYM6 628, as well as SYM2/TP 620 and SYM3/TP 622) may be used to carry the training signal (or pilot signal). Furthermore, in frames with multiple special subframes, all of the special subframes may have extended TPs, a subset of the special subframes may have extended TPs, or none of the special subframes may have extended TPs.

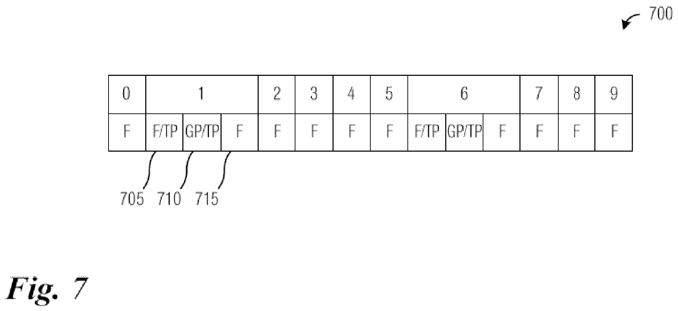

Figure 7 illustrates an example full-duplex frame structure 700 with an extended TP special subframe. Full-duplex subframe structure 700 is based on subframe configuration 0, 1, 2, or 6 of a 3GPP LTE TDD compliant communications system. Subframes 0 and 2 of full-duplex subframe structure 700 may be used for flexible transmission (i.e., downlink transmissions and uplink transmissions). Subframe 1 of full-duplex subframe structure 700 may be a special subframe including a first portion 705 supporting flexible transmission and optionally extended TP, a second portion 710 supporting GP/TP, and third portion 715 supporting flexible transmission. Subframe 6 of full-duplex subframe structure 700 may be another subframe with the same or different configuration from subframe 1.

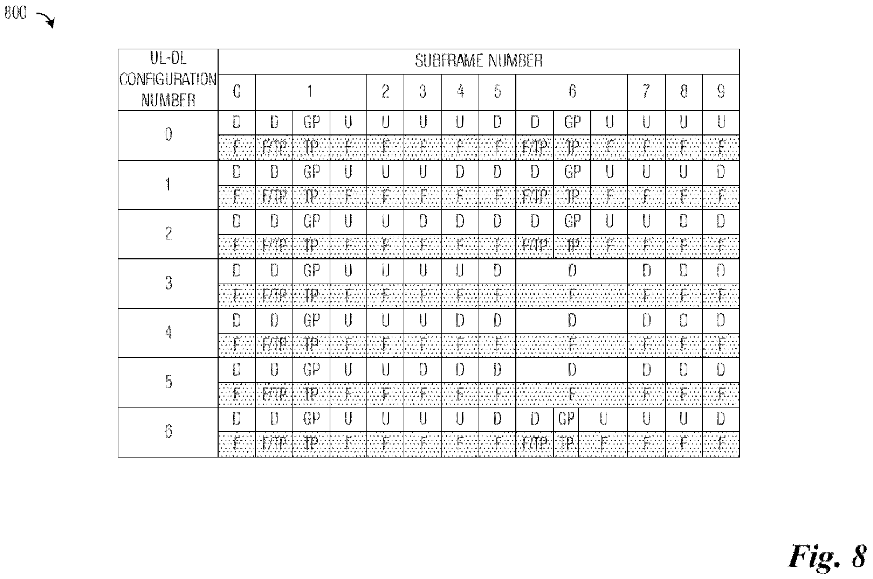

Figure 8 illustrates a diagram 800 of an example overview of full-duplex frame configurations derived from 3GPP LTE TDD uplink-downlink frame configurations. Diagram 800 displays transmission assignments for different full-duplex frame configurations that are derived from 3GPP LTE TDD uplink-downlink frame configurations. For each full-duplex frame configuration, an original 3GPP LTE TDD uplink-downlink frame configuration is shown above a corresponding full-duplex frame configuration.

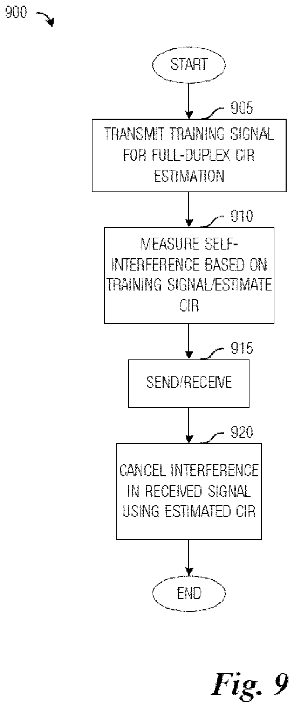

Figure 9 illustrates a flow diagram of example operations 900 occurring at a device operating in full-duplex mode. Operations 900 may be indicative of operations occurring at a device, such as an eNB capable of full-duplex operation or a full-duplex UE, as the device operates in full-duplex mode.

Operations 900 may begin with the device transmitting a training signal for full-duplex CIR estimation (block 905). The half-duplex training signal may be transmitted in packets as described in the example embodiments presented herein. As an illustrative example, the training signal is transmitted in GP/TP portions of special subframes of packets. As another illustrative example, the training signal may be transmitted in parts of downlink portions of special subframes of packets, as well as in GP/TP portions of the special subframes. The device measures self-interference in accordance with the training signal, as well as estimate CIR (block 910). The device sends and receives (block 915). The device cancels interference present in the received signals by using the estimated CIR (block 920).

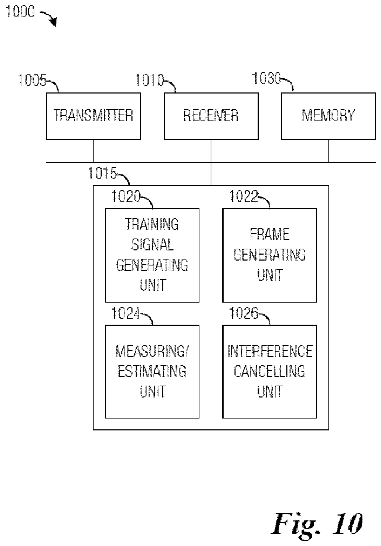

Figure 10 illustrates an example communications device 1000. Communications device 1000 is an implementation of a device operating in a full-duplex mode, such as an eNB capable of full-duplex operation or a full-duplex UE. Communications device 1000 may be used to implement various ones of the embodiments discussed herein. As shown in Figure 10, a transmitter 1005 is configured to transmit packets, half-duplex training signals, and the like. Communications device 1000 also includes a receiver 1010 that is configured to receive packets, and the like.

A training signal generating unit 1020 is configured to generate training signals used in CIR estimation. A frame generating unit 1022 is configured to generate frames and subframes, such as full-duplex frames and subframes, as discussed herein. Frame generating unit 10222 is configured to place signals, such as training signals, as well as signals transmitted by communications device 1000, in the frames and subframes. A measuring/estimating unit 1024 is configured to measure self-interference in accordance with the training signals transmitted by communications device 1000. Measuring/estimating unit 1024 is configured to use the measurements of the training signals to estimate CIR. An interference cancelling unit 1026 is configured to cancel self-interference in received signals from transmissions made by communications device 1000 using the estimated CIR. Interference in received signals from transmissions made by other communications devices is canceled or suppressed by other conventional units, such as a modulator, a demodulator, an encoder and a decoder (not shown in Figure 10) in the transmitter 1005 and the receiver 1010 in Figure 10. A memory 1030 is configured to store packets, training signals, generated frames and subframes, measurements, estimated CIR, received signals, self-interference, and the like.

The elements of communications device 1000 may be implemented as specific hardware logic blocks. In an alternative, the elements of communications device 1000 may be implemented as software executing in a processor, controller, application specific integrated circuit, or so on. In yet another alternative, the elements of communications device 1000 may be implemented as a combination of software and optionally hardware.

As an example, receiver 1010 and transmitter 1005 may be implemented as a specific hardware block, while training signal generating unit 1015, frame generating unit 1022, measuring/estimating unit 1024, and interference cancelling unit 1026 may be software modules executing in a microprocessor (such as processor 1015) or a custom circuit or a custom compiled logic array of a field programmable logic array. Training signal generating unit 1015, frame generating unit 1022, measuring/estimating unit 1024, and interference cancelling unit 1026 may be modules stored in memory 1030.

## Claims

1. A method (500) for operating a first device capable of full-duplex operation and self-interference cancellation, the method comprising:
scheduling (505), by the first device, a first flexible allocation resource of a frame as a first resource for a second device served by the first device;
scheduling, by the first device, a second flexible allocation resource of the frame as a second resource for a third device served by the first device;
wherein the first flexible allocation resource is configured as an uplink resource or downlink resource for communication between the first device and the second device and the second flexible allocation resource is configured as a downlink resource or uplink resource for communication between the first device and the third device; generating (510), by the first device, the frame including the flexible allocation resources and a first half-duplex training period configured to convey a first training signal, where the first half-duplex training period and the first training signal are used to perform an estimation of a channel impulse response, CIR, of a communications channel between a transmit antenna of the first device and a receive antenna of the first device;
transmitting and simultaneously receiving (515), by the first device, the frame;
estimating, by the first device, the CIR of the communications channel in accordance with the first training signal conveyed in the frame; and
cancelling, by the first device, self- interference in signals received by the first device, from transmissions made by the first device, wherein the self-interference cancellation is made using the estimated CIR;
wherein the generating (500), by the first device, the frame comprises placing the first training signal on the first half-duplex training period in the guard period of a special subframe of the frame.

2. The method (500) of claim 1, wherein the first flexible allocation resource: is configured as an uplink resource for the second device and the second flexible allocation resource is configured as a downlink resource for the third device, and the first flexible allocation resource and the second flexible allocation resource are mapped to the same physical allocation resource.

3. The method (500) of any one of claims 1 to 2, wherein the first flexible allocation resource is configured as a downlink resource for the second device and the second flexible allocation resource is configured as an uplink resource for the third device.

4. The method (500) of any one of claims 1 to 3, wherein the special subframe, comprising the first training signal in the first half-duplex training period, is the first special subframe of the frame.

5. The method (500) of any of claims 1 to 4 wherein the frame further comprises a second half-duplex training period in a second special subframe of the frame.

6. The method (500) of claim 5, further comprising placing a second training signal in the second half-duplex training period of the second special subframe of the frame.

7. The method (500) of any one of claims 1 to 6, wherein the special subframe is a Third Generation Partnership Project, 3GPP, Long Term Evolution, LTE, time division duplexed, TDD, special subframe.

8. The method (500) of any one of claims 1 to 7, wherein the first device is one of a full-duplex evolved NodeB and a full-duplex User Equipment.

9. A first device (1000) capable of full-duplex operation and self-interference cancellation , the first device comprising:
a processor (1015) configured to schedule a first flexible allocation resource of a frame as a first resource for a second device served by the first device (1000), to schedule a second flexible allocation resource of the frame as a second resource for a third device served by the first device (1000), wherein the first flexible allocation resource is configured as an uplink resource or downlink resource for communication between the first device and the second device and the second flexible allocation resource is configured as a downlink resource or uplink resource for communication between the first device and the third device; and to generate the frame including the flexible allocation resources and a first half-duplex training period configured to convey a first training signal, where the first half-duplex training period and the first training signal facilitate an estimation of a channel impulse response, CIR, of a communications channel between a transmit antenna of the first device and a receive antenna of the first device;
a transmitter (1005) operatively coupled to the processor (1015), the transmitter (1005) configured to transmit the frame; and
a receiver (1010) operatively coupled to the processor, the receiver configured to simultaneously receive the frame when transmitting the frame;
wherein the first device is configured to estimate the CIR of the communications channel in accordance with the first training signal conveyed in the frame; and
to cancel self- interference in signals received by the first device, from transmissions made by the first device, wherein the self-interference cancellation is made using the estimated CIR;
wherein the processor (1015) is configured to place the first training signal on the first half-duplex training period in the guard period of a special subframe of the frame.

10. The first device (1000) of claim 9, wherein the special subframe is a first special subframe of the frame, and the processor (1015) is further configured to place a second training signal in a second half-duplex training period in the guard period of a second special subframe of the frame.

11. The first device (1000) of claim 10, wherein the first device (1000) is one of a full-duplex evolved NodeB and a full-duplex User Equipment.

12. A communications system (100) comprising:
a plurality of user equipments (110); and
a full-duplex device (200) operatively coupled to the plurality of user equipments (110), the full-duplex device (200) including
a processor (1015), and
a non-transitory computer readable storage medium (1030) storing a program comprising programming instructions which, when executed by the processor (1015) of the full-duplex device (200), cause the full-duplex device (200) to carry out the following steps:
to schedule a first flexible allocation resource of a frame as a first resource for a second device served by the full-duplex device (200)
schedule a second flexible allocation resource of the frame as a second resource for a third device served by the full-duplex device (200),
wherein the first flexible allocation resource is configured as an uplink resource or downlink resource for communication between the first device and the second device and the second flexible allocation resource is configured as a downlink resource or uplink resource for communication between the first device and the third device;
generate the frame including the flexible allocation resources and a first half-duplex training period configured to convey a first training signal, where the first half-duplex training period and the first training signal facilitate an estimation of a channel impulse response, CIR, of a communications channel between a transmit antenna (205) of the full-duplex device (200) and a receive antenna (210) of the full-duplex device (200), and
simultaneously transmit and receive the frame;
wherein the programming includes instructions:
to estimate the CIR of the communications channel in accordance with the first training signal conveyed in the frame; and
to cancel self- interference in signals received by the first device, from transmissions made by the first device, wherein the self-interference cancellation is made using the estimated CIR;
wherein the programming includes instructions to place the first training signal on the first half-duplex training period in the guard period of a special subframe of the frame.

13. The communications system (100) of claim 12 wherein the special subframe is a first special subframe of the frame and wherein the programming includes: instructions to place a second training signal in a second half-duplex training period in the guard period of a second special subframe of the frame.

## Patentansprüche

1. Verfahren (500) zum Betreiben einer ersten Vorrichtung, die zu Vollduplex-Betrieb und Selbstinterferenzunterdrückung fähig ist, wobei das Verfahren Folgendes umfasst:
Planen (505), durch die erste Vorrichtung, einer ersten flexiblen Zuweisungsressource eines Rahmens als eine erste Ressource für eine zweite Vorrichtung, die von der ersten Vorrichtung bedient wird;
Planen, durch die erste Vorrichtung, einer zweiten flexiblen Zuweisungsressource des Rahmens als eine zweite Ressource für eine dritte Vorrichtung, die von der ersten Vorrichtung bedient wird;
wobei die erste flexible Zuweisungsressource als eine Uplink-Ressource oder Downlink-Ressource für Kommunikation zwischen der ersten Vorrichtung und der zweiten Vorrichtung ausgelegt ist, und die zweite flexible Zuweisungsressource als eine Downlink-Ressource oder Uplink-Ressource für Kommunikation zwischen der ersten Vorrichtung und der dritten Vorrichtung ausgelegt ist;
Erzeugen (510), durch die erste Vorrichtung, des Rahmens, der die flexiblen Zuweisungsressourcen enthält, und einer ersten Halbduplex-Trainingsperiode, die dazu ausgelegt ist, ein erstes Trainingssignal zu übermitteln,
wobei die erste Halbduplex-Trainingsperiode und das erste Trainingssignal verwendet werden, eine Schätzung einer Kanalimpulsantwort (CIR) eines Kommunikationskanals zwischen einer Sendeantenne der ersten Vorrichtung und einer Empfangsantenne der ersten Vorrichtung durchzuführen;
Senden und gleichzeitiges Empfangen (515), durch die erste Vorrichtung, des Rahmens;
Abschätzen, durch die erste Vorrichtung, der CIR des Kommunikationskanals im Einklang mit dem in dem Rahmen übermittelten ersten Trainingssignal; und
Unterdrücken, durch die erste Vorrichtung, der Selbstinterferenz in durch die erste Vorrichtung empfangenen Signalen von Übertragungen, die durch die erste Vorrichtung gemacht wurden,
wobei die Selbstinterferenzunterdrückung unter Verwendung der abgeschätzten CIR gemacht wird;
wobei das Erzeugen (500), durch die erste Vorrichtung, des Rahmens das Platzieren des ersten Trainingssignals auf der ersten Halbduplex-Trainingsperiode in die Schutzperiode eines speziellen Unterrahmens des Rahmens umfasst.

2. Verfahren (500) nach Anspruch 1,
wobei die erste flexible Zuweisungsressource als eine Uplink-Ressource für die zweite Vorrichtung ausgelegt ist, und die zweite flexible Zuweisungsressource als eine Downlink-Ressource für die dritte Vorrichtung ausgelegt ist, und die erste flexible Zuweisungsressource und die zweite flexible Zuweisungsressource derselben physikalischen Zuweisungsressource zugeordnet sind.

3. Verfahren (500) nach einem der Ansprüche 1 bis 2,
wobei die erste flexible Zuweisungsressource als eine Downlink-Ressource für die zweite Vorrichtung ausgelegt ist, und die zweite flexible Zuweisungsressource als eine Uplink-Ressource für die dritte Vorrichtung ausgelegt ist.

4. Verfahren (500) nach einem der Ansprüche 1 bis 3,
wobei der spezielle Unterrahmen, der das erste Trainingssignal in der ersten Halbduplex-Trainingsperiode umfasst, der erste spezielle Unterrahmen des Rahmens ist.

5. Verfahren (500) nach einem der Ansprüche 1 bis 4,
wobei der Rahmen ferner eine zweite Halbduplex-Trainingsperiode in einem zweiten speziellen Unterrahmen des Rahmens umfasst.

6. Verfahren (500) nach Anspruch 5,
ferner das Platzieren eines zweiten Trainingssignals in die zweite Halbduplex-Trainingsperiode des zweiten speziellen Unterrahmens des Rahmens umfassend.

7. Verfahren (500) nach einem der Ansprüche 1 bis 6,
wobei der spezielle Unterrahmen ein spezieller Unterrahmen mit "Third Generation Partnership Project" (3GPP), "Long Term Evolution" (LTE), "Time Division Duplex" (TDD) ist.

8. Verfahren (500) nach einem der Ansprüche 1 bis 7,
wobei die erste Vorrichtung eine eines Vollduplex-entwickelten "NodeB" und eines Vollduplex-Benutzergerätes ist.

9. Erste Vorrichtung (1000), die zu Vollduplex-Betrieb und Selbstinterferenzunterdrückung fähig ist, wobei die erste Vorrichtung Folgendes umfasst:
einen Prozessor (1015), der dazu ausgelegt ist, eine erste flexible Zuweisungsressource eines Rahmens als eine erste Ressource für eine von der ersten Vorrichtung (1000) bediente zweite Vorrichtung zu planen, und eine zweite flexible Zuweisungsressource des Rahmens als eine zweite Ressource für eine von der ersten Vorrichtung (1000) bediente dritte Vorrichtung zu planen,
wobei die erste flexible Zuweisungsressource als eine Uplink-Ressource oder Downlink-Ressource für Kommunikation zwischen der ersten Vorrichtung und der zweiten Vorrichtung ausgelegt ist, und die zweite flexible Zuweisungsressource als eine Downlink-Ressource oder Uplink-Ressource für Kommunikation zwischen der ersten Vorrichtung und der dritten Vorrichtung ausgelegt ist;
und den Rahmen zu erzeugen, der die flexiblen Zuweisungsressourcen enthält, und eine erste Halbduplex-Trainingsperiode, die dazu ausgelegt ist, ein erstes Trainingssignal zu übermitteln,
wobei die erste Halbduplex-Trainingsperiode und das erste Trainingssignal verwendet werden, um eine Schätzung einer Kanalimpulsantwort (CIR) eines Kommunikationskanals zwischen einer Sendeantenne der ersten Vorrichtung und einer Empfangsantenne der ersten Vorrichtung zu unterstützen;
einen Sender (1005), der mit dem Prozessor (1015) wirkverbunden ist, wobei der Sender (1005) dazu ausgelegt ist, den Rahmen zu übertragen; und
einen Empfänger (1010), der mit dem Prozessor wirkverbunden ist, wobei der Empfänger dazu ausgelegt ist, den Rahmen gleichzeitig zu empfangen, wenn er den Rahmen sendet;
wobei die erste Vorrichtung dazu ausgelegt ist, die CIR des Kommunikationskanals im Einklang mit dem in dem Rahmen übermittelten ersten Trainingssignal abzuschätzen; und
die Selbstinterferenz in durch die erste Vorrichtung empfangenen Signalen von Übertragungen, die durch die erste Vorrichtung gemacht wurden, zu unterdrücken,
wobei die Selbstinterferenzunterdrückung unter Verwendung der abgeschätzten CIR gemacht wird;
wobei der Prozessor (1015) dazu ausgelegt ist, das erste Trainingssignal auf der ersten Halbduplex-Trainingsperiode in die Schutzperiode eines speziellen Unterrahmens des Rahmens zu platzieren.

10. Erste Vorrichtung (1000) nach Anspruch 9,
wobei der spezielle Unterrahmen ein erster spezieller Unterrahmen des Rahmens ist, und der Prozessor (1015) ferner dazu ausgelegt ist, ein zweites Trainingssignal in eine zweite Halbduplex-Trainingsperiode in der Schutzperiode eines zweiten speziellen Unterrahmens des Rahmens zu platzieren.

11. Erste Vorrichtung (1000) nach Anspruch 10,
wobei die erste Vorrichtung (1000) eine eines Vollduplex-entwickelten "NodeB" und eines Vollduplex-Benutzergerätes ist.

12. Kommunikationssystem (100), das Folgendes umfasst:
eine Vielzahl von Benutzergeräten (110); und
eine Vollduplex-Vorrichtung (200), die mit der Vielzahl von Benutzergeräten (110) wirkverbunden ist, wobei die Vollduplex-Vorrichtung (200) einen Prozessor (1015) aufweist, und
ein nicht-transitorisches computerlesbares Speichermedium (1030), das ein Programm speichert, das Programmanweisungen umfasst, die, wenn sie durch den Prozessor (1015) der Vollduplex-Vorrichtung (200) ausgeführt werden, die Vollduplex-Vorrichtung (200) veranlassen, die folgenden Schritte auszuführen:
Planen einer ersten flexiblen Zuweisungsressource eines Rahmens als eine erste Ressource für eine zweite Vorrichtung, die von der Vollduplex-Vorrichtung (200) bedient wird;
Planen einer zweiten flexiblen Zuweisungsressource des Rahmens als eine zweite Ressource für eine dritte Vorrichtung, die von der Vollduplex-Vorrichtung (200) bedient wird;
wobei die erste flexible Zuweisungsressource als eine Uplink-Ressource oder Downlink-Ressource für Kommunikation zwischen der ersten Vorrichtung und der zweiten Vorrichtung ausgelegt ist, und die zweite flexible Zuweisungsressource als eine Downlink-Ressource oder Uplink-Ressource für Kommunikation zwischen der ersten Vorrichtung und der dritten Vorrichtung ausgelegt ist;
Erzeugen des Rahmens, der die flexiblen Zuweisungsressourcen enthält, und eine erste Halbduplex-Trainingsperiode, die dazu ausgelegt ist, ein erstes Trainingssignal zu übermitteln,
wobei die erste Halbduplex-Trainingsperiode und das erste Trainingssignal verwendet werden, um eine Schätzung einer Kanalimpulsantwort (CIR) eines Kommunikationskanals zwischen einer Sendeantenne (205) der Vollduplex-Vorrichtung (200) und einer Empfangsantenne (210) der Vollduplex-Vorrichtung (200) zu unterstützen und den Rahmen gleichzeitig zu senden und zu empfangen;
wobei die Programmierung Anweisungen enthält,
um die CIR des Kommunikationskanals im Einklang mit dem in dem Rahmen übermittelten ersten Trainingssignal abzuschätzen; und
die Selbstinterferenz in durch die erste Vorrichtung empfangenen Signalen von Übertragungen, die durch die erste Vorrichtung gemacht wurden, zu unterdrücken,
wobei die Selbstinterferenzunterdrückung unter Verwendung der abgeschätzten CIR gemacht wird;
wobei die Programmierung Anweisungen enthält, das erste Trainingssignal auf der ersten Halbduplex-Trainingsperiode in die Schutzperiode eines speziellen Unterrahmens des Rahmens zu platzieren.

13. Kommunikationssystem (100) nach Anspruch 12,
wobei der spezielle Unterrahmen ein erster spezieller Unterrahmen des Rahmens ist, und
wobei die Programmierung Folgendes enthält:
Anweisungen, um ein zweites Trainingssignal in eine zweite Halbduplex-Trainingsperiode in der Schutzperiode eines zweiten speziellen Unterrahmens des Rahmens zu platzieren.

## Revendications

1. Procédé (500) de fonctionnement d'un premier dispositif capable de fonctionner en duplex intégral et d'annuler un auto-brouillage, le procédé comprenant les étapes consistant à :
planifier (505), par le premier dispositif, une première ressource d'affectation flexible d'une trame en guise de première ressource pour un deuxième dispositif desservi par le premier dispositif ;
planifier, par le premier dispositif, une seconde ressource d'affectation flexible de la trame en guise de seconde ressource pour un troisième dispositif desservi par le premier dispositif ;
la première ressource d'affectation flexible étant configurée comme une ressource en liaison montante ou une ressource en liaison descendante pour une communication entre le premier dispositif et le deuxième dispositif et la seconde ressource d'affectation flexible étant configurée comme une ressource en liaison descendante ou une ressource en liaison montante pour une communication entre le premier dispositif et le troisième dispositif ;
générer (510), par le premier dispositif, la trame incluant les ressources d'affectation flexibles et une première période d'apprentissage en semi-duplex configurée pour transporter un premier signal d'apprentissage, la première période d'apprentissage en semi-duplex et le premier signal d'apprentissage étant utilisés pour réaliser une estimation d'une réponse impulsionnelle de canal (CIR) d'un canal de communication entre une antenne d'émission du premier dispositif et une antenne de réception du premier dispositif ;
émettre et recevoir simultanément (515), par le premier dispositif, la trame ;
estimer, par le premier dispositif, la CIR du canal de communication selon le premier signal d'apprentissage transporté dans la trame ; et
annuler, par le premier dispositif, un auto-brouillage dans des signaux reçus par le premier dispositif, d'émissions effectuées par le premier dispositif, l'annulation d'auto-brouillage étant effectuée au moyen de la CIR estimée ;
la génération (500), par le premier dispositif, de la trame comprenant l'étape consistant à placer le premier signal d'apprentissage sur la première période d'apprentissage en semi-duplex dans la période de garde d'une sous-trame spéciale de la trame.

2. Procédé (500) selon la revendication 1, dans lequel la première ressource d'affectation flexible est configurée comme une ressource en liaison montante pour le deuxième dispositif et la seconde ressource d'affectation flexible est configurée comme une ressource en liaison descendante pour le troisième dispositif, et la première ressource d'affectation flexible et la seconde ressource d'affectation flexible sont mises en concordance avec la même ressource d'affectation physique.

3. Procédé (500) selon l'une quelconque des revendications 1 et 2, dans lequel la première ressource d'affectation flexible est configurée comme une ressource en liaison descendante pour le deuxième dispositif et la seconde ressource d'affectation flexible est configurée comme une ressource en liaison montante pour le troisième dispositif.

4. Procédé (500) selon l'une quelconque des revendications 1 à 3, dans lequel la sous-trame spéciale, comprenant le premier signal d'apprentissage dans la première période d'apprentissage en semi-duplex, est la première sous-trame spéciale de la trame.

5. Procédé (500) selon l'une quelconque des revendications 1 à 4, dans lequel la trame comprend en outre une seconde période d'apprentissage en semi-duplex dans une seconde sous-trame spéciale de la trame.

6. Procédé (500) selon la revendication 5, comprenant en outre l'étape consistant à placer un second signal d'apprentissage dans la seconde période d'apprentissage en semi-duplex de la seconde sous-trame spéciale de la trame.

7. Procédé (500) selon l'une quelconque des revendications 1 à 6, dans lequel la sous-trame spéciale est une sous-trame spéciale duplexée par répartition dans le temps (TDD) d'évolution à long terme (LTE) du Third Generation Partnership Project (3 GPP).

8. Procédé (500) selon l'une quelconque des revendications 1 à 7, dans lequel le premier dispositif est un Nœud B évolué en duplex intégral ou un équipement d'utilisateur en duplex intégral.

9. Premier dispositif (1000) capable de fonctionner en duplex intégral et d'annuler un auto-brouillage, le premier dispositif comprenant :
un processeur (1015) configuré pour planifier une première ressource d'affectation flexible d'une trame en guise de première ressource pour un deuxième dispositif desservi par le premier dispositif (1000), pour planifier une seconde ressource d'affectation flexible de la trame en guise de seconde ressource pour un troisième dispositif desservi par le premier dispositif (1000), la première ressource d'affectation flexible étant configurée comme une ressource en liaison montante ou une ressource en liaison descendante pour une communication entre le premier dispositif et le deuxième dispositif et la seconde ressource d'affectation flexible étant configurée comme une ressource en liaison descendante ou une ressource en liaison montante pour une communication entre le premier dispositif et le troisième dispositif ; et pour générer la trame incluant les ressources d'affectation flexibles et une première période d'apprentissage en semi-duplex configurée pour transporter un premier signal d'apprentissage, la première période d'apprentissage en semi-duplex et le premier signal d'apprentissage facilitant une estimation d'une réponse impulsionnelle de canal (CIR) d'un canal de communication entre une antenne d'émission du premier dispositif et une antenne de réception du premier dispositif ;
un émetteur (1005) couplé de manière fonctionnelle au processeur (1015), l'émetteur (1005) étant configuré pour émettre la trame ; et
un récepteur (1010) couplé de manière fonctionnelle au processeur, le récepteur étant configuré pour recevoir simultanément la trame lors de l'émission de la trame ;
le premier dispositif étant configuré pour estimer la CIR du canal de communication selon le premier signal d'apprentissage transporté dans la trame ; et pour annuler un auto-brouillage dans des signaux reçus par le premier dispositif, d'émissions effectuées par le premier dispositif, l'annulation d'auto-brouillage étant effectuée au moyen de la CIR estimée ;
le processeur (1015) étant configuré pour placer le premier signal d'apprentissage sur la première période d'apprentissage en semi-duplex dans la période de garde d'une sous-trame spéciale de la trame.

10. Premier dispositif (1000) selon la revendication 9, dans lequel la sous-trame spéciale est une première sous-trame spéciale de la trame et le processeur (1015) est en outre configuré pour placer un second signal d'apprentissage dans une seconde période d'apprentissage en semi-duplex dans la période de garde d'une seconde sous-trame spéciale de la trame.

11. Premier dispositif (1000) selon la revendication 10, dans lequel le premier dispositif (1000) est un Nœud B évolué en duplex intégral ou un équipement d'utilisateur en duplex intégral.

12. Système de communication (100), comprenant :
une pluralité d'équipements d'utilisateur (110) ; et
un dispositif en duplex intégral (200) couplé de manière fonctionnelle à la pluralité d'équipements d'utilisateur (110), le dispositif en duplex intégral (200) incluant :
un processeur (1015), et
un support de stockage non temporaire et lisible par ordinateur (1030), stockant un programme comprenant des instructions de programmation qui, lorsqu'elles sont exécutées par le processeur (1015) du dispositif en duplex intégral (200), amènent le dispositif en duplex intégral (200) à réaliser les étapes suivantes pour :
planifier une première ressource d'affectation flexible d'une trame en guise de première ressource pour un deuxième dispositif desservi par le dispositif en duplex intégral (200) ;
planifier une seconde ressource d'affectation flexible de la trame en guise de seconde ressource pour un troisième dispositif desservi par le dispositif en duplex intégral (200), la première ressource d'affectation flexible étant configurée comme une ressource en liaison montante ou une ressource en liaison descendante pour une communication entre le premier dispositif et le deuxième dispositif et la seconde ressource d'affectation flexible étant configurée comme une ressource en liaison descendante ou une ressource en liaison montante pour une communication entre le premier dispositif et le troisième dispositif ;
générer la trame incluant les ressources d'affectation flexibles et une première période d'apprentissage en semi-duplex configurée pour transporter un premier signal d'apprentissage, la première période d'apprentissage en semi-duplex et le premier signal d'apprentissage facilitant une estimation d'une réponse impulsionnelle de canal (CIR) d'un canal de communication entre une antenne d'émission (205) du dispositif en duplex intégral (200) et une antenne de réception (210) du dispositif en duplex intégral (200) ; et
émettre et recevoir simultanément la trame ;
la programmation incluant des instructions pour :
estimer la CIR du canal de communication selon le premier signal d'apprentissage transporté dans la trame ; et
annuler un auto-brouillage dans des signaux reçus par le premier dispositif, d'émissions effectuées par le premier dispositif, l'annulation d'auto-brouillage étant effectuée au moyen de la CIR estimée ;
la programmation incluant des instructions pour placer le premier signal d'apprentissage sur la première période d'apprentissage en semi-duplex dans la période de garde d'une sous-trame spéciale de la trame.

13. Système de communication (100) selon la revendication 12, dans lequel la sous-trame spéciale est une première sous-trame spéciale de la trame et dans lequel la programmation inclut :
des instructions pour placer un second signal d'apprentissage dans une seconde période d'apprentissage en semi-duplex dans la période de garde d'une seconde sous-trame spéciale de la trame.
